# EUROPEAN PATENT APPLICATION

(11) **EP 2 184 836 A1**
(43) Date of publication of application: **12.05.2010**
(21) Application number: 08019602.5
(22) Date of filing: 10.11.2008
(51) Int. Cl.: H02K 7/10, B65G 23/08, H02K 9/19

(54) **Drum motor with improved cooling**

(71) Applicant: Interroll Trommelmotoren GmbH, 41836 Hückelhoven (DE)
(72) Inventor: Jennings, Steven, 41379 Brüggen (DE)
(74) Representative: Eisenführ, Speiser & Partner

(57) **Abstract**

The invention relates to a motor comprising a drive unit like a rotor/stator unit of an electric motor or a hydraulic or pneumatic actuator, an output shaft coupled to the drive unit to transfer rotational movement and torque and an inner housing surrounding at least partially the drive unit, wherein the output shaft is journalled to rotate in rotation to the inner housing. According to the invention, a motor is provided having double-wall housing with an interior space between the inner and the outer housing wherein the outer housing is coupled to the inner housing such that it is free to rotate in relation thereto.

## Description

The invention relates to a motor comprising a drive unit like a rotor/stator unit of an electric motor or a hydraulic or pneumatic actuator, an output shaft coupled to the drive unit to transfer rotational movement and torque and an inner housing surrounding at least partially the drive unit, wherein the output shaft is journalled to rotate in relation to the inner housing.

Motors of this type are used in a variety of applications. One particular application is the use as motive power sources in material handling applications. In such type of applications the motors are often used as gear motors. Such gear motor comprises a drive unit and a gear which is directly coupled to the drive unit to adapt the torque and the rotational speed of the drive unit to the particular application. Usually, the gear is adapted to reduce the rotational speed and to increase the torque of the drive unit.

The drive unit may usually be a standard induction motor or of the type brushed or brushless. However, it is to be understood that the drive unit may be of any other type e.g: a pneumatically or hydraulic driven rotational actuator.

Gear motors of the aforementioned type are rated in terms of the mechanical power which they can provide and in terms of their physical protection. The physical protection of such a gear motor or a motor is classified as a so called ingress protection ("IP") followed by a number standing for a lower or a better physical protection. Depending on the type of application it is desired to provide a respective IP in order to fulfil the requirements of safe operation of the motor.

A general problem associated with such gear motors is the requirement to provide high mechanical power rate with a motor having low dimensions. Generally, one problem associated with such high mechanical power gear motor is the heat being generated within the drive unit and the gear. Increased heat within the gear motor will result in damage of the motor and thus, different methods and arrangements to cool such gear motors are applied. Prior art gear motors are cooled using a fan which is driven by the motor or by an external device and which blows air across or through the housing of the gear motor. By such forced air cooling, a significant amount of heat can be removed from the gear motor However, such an arrangement makes it difficult to fulfil a high ingress protection classification since the fan and the air flow must be considered in any physical protection means. Thus, gear motors having forced air cooling will usually not provide a high IP class.

It is further known to provide convection cooling by a plurality of rips or the like on the outer surface of the housing. However, this significantly increases the dimension of the motor and makes it more difficult to clean the motor. Further, the amount of heat which can be removed by such convection cooling is limited and thus the mechanical power of such gear motor having convection cooling is limited.

Still further, it is known to provide water cooling in such gear motor using a pump which circulates water between the gear motor and a heat exchanger. However, such arrangement is expensive and makes it difficult to provide a high IP class.

It is an object of the invention to provide a motor, in particular a gear motor having a high mechanical power at low dimensions.

It is a further object of the invention to provide a motor, in particular a gear motor having a high ingress protection.

It is a further object of the invention to provide a gear motor which can be produced in a manufacturing process which a simple and less expensive than known manufacturing processes for high mechanical output motors.

These and other objects of the invention are achieved by providing a motor as described before which is characterized by an outer housing surrounding at least partially the housing and defining a space between the inner and the outer housing, wherein the outer housing is pivoted to rotate in relation to the inner housing.

According to the invention, a motor is provided having double-wall housing with an interior space between the inner and the outer housing wherein the outer housing is coupled to the inner housing such that it is free to rotate in relation thereto. By this, a relative rotation between the inner housing and the outer housing it made possible. Using such an arrangement will allow an effective heat transfer from the inner housing to the outer housing by forced movement of a fluid in the space between inner and outer housing. This fluid may be air or another type of gaseous fluid but preferably may be a liquid like oil or any other liquid having high heat transfer capacity. The outer housing surrounds the inner housing and has a larger surface thus allowing to remove a higher amount of heat into ambient air than the inner housing if this is directly exposed to ambient air. Still further the outer housing is free to rotate and by such rotation of the outer housing a forced air cooling with increased heat transfer is provided at the outer surface of the housing. By this, the heat transfer from the outer housing to ambient air is further increased. Further, the heat transfer from the fluid in the inner space to the outer housing is improved still further, as the fluid will be set into relative motion to the inner housing, heat transfer from the inner housing to the fluid is improved.

It is to be understood that the outer housing may be rotated by an external device or may be coupled to the drive unit, e.g. via the output shaft to be driven and set into rotation. Preferably, the rotational axis of the outer housing is coaxial to the rotational axis of the drive unit or to the output shaft. In particular, in case that further a gear is present, this gear may be a planetary gear which rotational central axis is coaxial to rotational axis of the drive unit and the output shaft and the outer housing. This will allow to design a compact motor having one central and common axis of rotation which will mainly allow the use of standard elements for its manufacturing process.

According to a first preferred embodiment the space between the inner and the outer housing is sealed against ambient air and preferably against the drive unit and is filled with a liquid, preferably a liquid having heat conducting properties which are better than water. By this an improved heat transfer is provided between the inner and the outer housing by providing such liquid in the space. It is to be understood that the liquid provided in the space need not to be circulated by a pump or the like since heat transfer via said liquid is significantly forced by the rotation of the outer housing in relation to the inner housing. By this, forced heat transfer by internal liquid flow in the space is provided.

It is preferred that the inner housing comprises fastening elements, in particular a flange, for fastening the motor to a mounting point. Such fastening elements may be fastening points like bores or the like provided at the inner housing adapted to attach the motor to a mounting point like a metal frame of a conveyer system or the like. Preferably a flange is provided which is fastened to the inner housing or which is provided as an integral part of said inner housing. It is to be understood that in case a gear is provided, the inner housing may be fastened to the gear housing and said gear housing may comprise such fastening element or may be fastened a flange for fastening the motor to a mounting point. Said flange or fastening means will provide the counter part for the torque being transferred by the output shaft of the motor.

According to a further preferred embodiment a gearbox is provided which is intern connected between the drive unit and the output shaft. With this embodiment the rotational speed of the drive unit may be changed, in particular reduced significantly and at the same time the torque of the output shaft may be increased significantly to provide better performance of the speed and the torque for particular applications.

According to a still further embodiment the outer housing is coupled to the drive unit such that the outer housing is driven to rotate against the inner housing. According to this embodiment the outer housing is set into rotation by the drive unit itself by a direct mechanical coupling of the drive unit to the outer housing. It is to be understood that such mechanical coupling may be provided directly from the drive unit to the outer housing but may preferably be provided from an output shaft of a gear box which is coupling to the drive unit. Whereas in the former couple the outer housing may rotate at the same speed as the drive unit in the latter coupling the outer housing will rotate at the same speed as the drive shaft which usually is significantly slower. The coupling of the outer housing to the drive unit may be provided via gear wheels, a driving belt or the like.

Still further, it is preferred that the outer housing is coupled to the drive unit via the output shaft to rotate together with the output shaft. This embodiment will allow a simple mechanical construction of the motor and a simple manufacturing since the outer housing can be driven directly from the output shaft extending from the inner housing of the drive unit or a gear box coupled to said drive unit.

Still further, it is preferred that the outer housing is coupled to the drive unit via a gear to rotate at a different speed than the output shaft. This embodiment may be in particular useful in applications where the rotational speed of the drive unit is significantly decreased by a gearbox coupled between the drive unit and the output shaft. In such case the rotational speed of the output shaft may not be high enough to provide sufficient heat dissipation and thus it may be desired to increase the rotational speed of the outer housing in relation to the output shaft via a gear.

Still further it is preferred that the inner housing and, if present, the gear box is completely arranged within the outer housing. According to this embodiment all relevant parts which may produce heat when the motor is driven in high mechanical power output are arranged within the outer housing and may thus be in contact with the fluid arranged within the space between the inner and the outer housing. This will ensure that the heat dissipated from the drive unit and the gearbox is safely transported to the outer housing and can be dissipated from the outer housing.

Still further it is preferred that the inner housing has a cylindrical outer surface and the outer housing has a cylindrical inner surface. This will reduce the mechanical resistance and friction produced by rotation of the outer housing in relation to the inner housing without significantly reducing the heat transfer from the inner to the outer housing. In particular, a cylindrical cross sectional shape of the inner and the outer housing may be provided. Still further, such cylindrical shape allows for a compact design of the whole motor.

Still further it is preferred that the outer housing has a can-like shape, having circular cross section with a closed end and an open end, wherein the output shaft extends through the open end. This specific design allows for an easy manufacturing process and low manufacturing costs and at the same time ensures save sealing of the outer housing since only at the open end of the housing seals have to be provided to seal the space between the inner and outer housing against ambient air.

According to a further preferred embodiment there is provided a first rotational bearing for rotation between the outer housing and the inner housing or a flange connected to the inner housing and a second rotational bearing for rotation between the output shaft and said inner housing or said flange connected to said inner housing. This arrangement of two rotational bearings which may be ball or other bearings or bush bearings allows for a compact design and a cost effective manufacturing process. Preferably, both rotational bearings are provided at the same side of the drive unit in particular if the outer housing has a can-like shape. In such design the whole drive unit including the inner housing, a gearbox and a flange fixed to the inner housing may be inserted into the outer housing from the open end in a pre-mounted condition thus facilitating manufacturing of the whole motor.

Still further it is preferred that the outer surface of the outer housing is cylindrical. It is to be understood that heat dissipation from the outer housing may be improved by ribs, fins or the like but it is a particular effect of the invention that the outer housing may preferably have a smooth and cylindrical outer surface wall significantly facilitating cleaning of the whole motor. The specific design and the rotation of the outer housing will provide significant heat dissipation from the outer housing.

Still further according to a final preferred embodiment the motor according to the invention may be **characterized in that** the inner housing has a cylindrical outer cross-section and is fastened to a gearbox housing,
- wherein the drive unit is coupled to said gear box to transfer torque and rotation, said outer housing being closed at one end and being open at the other end,
- wherein further said inner housing and said gearbox are arranged within said outer housing having a cylindrical cross section such that a heat conducting space filled with a heat conducting liquid, in particular oil is provided inside said outer housing,
- said inner housing and said gearbox being immersed in and sealed against said heat conducting liquid,
- wherein the output shaft is extending from the gear box and exits the outer housing at its open end
- wherein a flange is fastened to the gearbox housing
- wherein a first rotational bearing is provided between the flange and the output shaft, and
- wherein a second rotational bearing is provided between the flange and the outer housing, the second rotational bearing preferably surrounding the first rotational bearing. According to this preferred embodiment a specific construction or setup of a gear motor is provided having an outer housing which is coupled to rotate with the output shaft and thus a significantly increased cooling of the drive unit and the gearbox is provided.

According to a further preferred embodiment, a control unit or a coupling unit is provided which is adapted to control the speed of rotation of the outer housing in relation to the power output of the drive unit, in particular adapted to provide a low speed of rotation of the outer housing at a low power output of the drive unit and to provide a high speed of rotation of the outer housing at a high power output of the drive unit. By this, a load-dependent cooling of the drive unit is provided. To this extent, a sensor for detecting the power output of the drive unit could be provided or the power output could be calculated from a voltage and current provided to the drive unit. The outer housing could be driven by a separate device like e.g. an electric motor.

Still further, a control unit could preferably be provided which is adapted to control the speed of rotation of the outer housing in relation to the temperature of the drive unit, in particular adapted to provide a low speed of rotation of the outer housing at a low temperature of the drive unit and to provide a high speed of rotation of the outer housing at a high temperature of the drive unit. By this, the power required to drive the outer housing is optimised in that the outer housing is only rotated at a speed which is required for the actual cooling purposes. Preferably, a temperature sensor is provided which is arranged and adapted to detect the temperature of the drive unit or a part of the drive unit. The cooling sensor is coupled for signal transmission to the control unit. The control unit may then control an electric motor or the like to drive the outer housing depending on the signal transmitted by the temperature sensor.

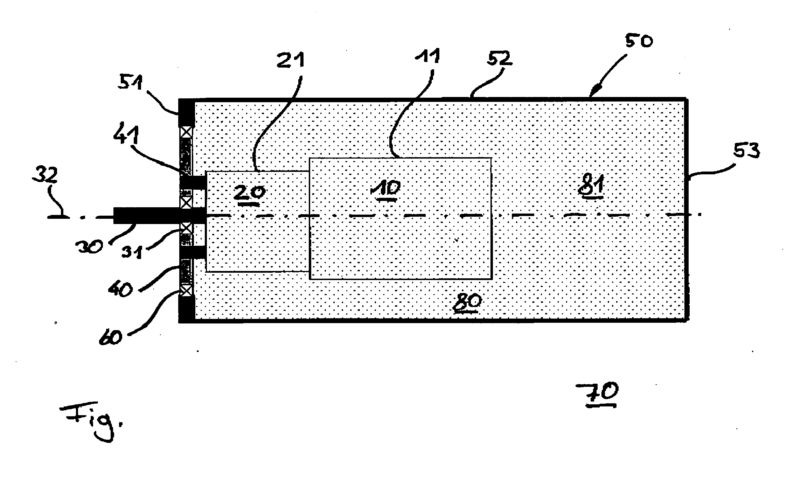

The invention will be more fully understood by a preferred embodiment as shown in the figure. In the figure a schematical, sectional side elevation view of a gear motor according to the invention is shown.

The gear motor comprises a drive unit 10 having a cylindrical drive unit housing 11. The drive unit 10 is directly coupled to a gearbox 20 having a gearbox housing 21. The gearbox housing 21 and the drive unit housing 11 are fastened to each other.

A motor drive shaft 30 extends out of the gearbox at the end opposing to the side where the drive unit 10 is fastened to the gearbox. The motor drive shaft 30 extends through a fixed mounting flange 40 which is fastened to the gearbox via a plurality of studs 41. The motor drive shaft is pivoted via a rotational bearing 31 in relation to the fixed mounting flange 40.

The motor drive shaft 30 rotates around its longitudinal axis 32. The gearbox 20 and its housing 21 and the drive unit 10 and its housing 11 are arranged concentrically in relation to the rotational axis 32.

An outer housing 50 encapsulates the drive unit 10 and the gearbox 20. The outer housing comprises a front side ring section 51, a cylindrical wall 52 and a rear side circle plate section 53. The outer housing 50 is journalled in relation to the fixed mounting flange 40 via a rotational bearing 60. The rotational bearing 60 has a diameter which is significantly larger than the diameter of the rotational bearing 31. The rotational bearing 31 and the rotational bearing 60 are arranged coaxially and at no axial displacement to each other such that the rotational bearing 60 encompasses the rotational bearing 31.

The outer housing 50 is sealed against ambient air 70 by respective sealing in the rotational bearings 31, 60 and by the fixed mounting flange 40. Thus, a sealed volume 80 inside the outer housing is provided which is filled with oil having a high heat conductance.

The drive unit 10 and the gearbox 20 are sealed against this inner space 80 by the drive unit housing 11, the gearbox housing 21 and a respective sealing the gearbox the output of the motor drive shaft 30. Alternatively, the gearbox may be coupled fastened to the fixed mounting flange via a ring element 41 instead of the studs 41, the ring element sealingly engaging the gearbox and the mounting flange. By this, a sealed space inside the ring element 41 is provided which can be filled with air avoiding the need to provide a sealing at the exit point of the motor drive shaft from the gearbox and at the rotational bearing 31.

As shown in the Figure, only motor drive shaft 30 and the outer housing 50 comprising its sections 51 - 53 rotate in operation of the drive unit. Thus, a forced movement of the oil inside the inner space 80 is achieved improving heat dissipation from the drive unit 10 and the gearbox 20. Further, an oil reservoir 81 at the end of the drive unit opposing the gearbox 20 is provided to increase the oil volume available for heat dissipation. This increased oil volume will allow to compensate a short increase of mechanical output power by heat dissipation and storage in the large oil volume without the risk of damaging the drive unit or the gearbox.

## Claims

1. Motor, comprising
- a drive unit (10) like a rotor/stator unit of an electric motor or a hydraulic or pneumatic actuation unit.
- an output shaft (30) coupled to the drive unit to transfer rotational movement and torque,
- an inner housing (11) surrounding at least partially the drive unit, wherein the output shaft is journalled to rotate in relation to the inner housing,
**characterized by**
- an outer housing (50) surrounding at least partially the housing and defining a space (80) between the inner and the outer housing, wherein the outer housing is pivoted to rotate in relation to the inner housing.

2. Motor according to claim 1,
**characterized in that** the space (80) between the inner and the outer housing is sealed against ambient air (70) and preferably against the drive unit (10) and is filled with a liquid, preferably a liquid having heat conducting properties which are higher than water.

3. Motor according to claim 1 or 2,
**characterized by** a gear box (20) interconnected between the drive unit (10) and the output shaft (30).

4. Motor according to any of the preceding claims,
**characterized in that** the inner housing comprises fastening elements (40), in particular a flange, for fastening the motor to a mounting point.

5. Motor according to any of the preceding claims,
**characterized in that** the outer housing is coupled to the drive unit such that the outer housing is driven to rotate against the inner housing.

6. Motor according to claim 5,
**characterized in that** the outer housing is coupled to the drive unit via the output shaft (30) to rotate together with the output shaft.

7. Motor according to claim 5 or 6,
**characterized in that** the outer housing (50) is coupled to the drive unit (10) via a gear to rotate at a different speed than the output shaft.

8. Motor according to any of the preceding claims,
**characterized in that** the inner housing (11) and, if present, the gear box is completely arranged within the outer housing.

9. Motor according to any of the preceding claims,
**characterized in that** the inner housing (11) has a cylindrical outer surface and the outer housing has a cylindrical inner surface.

10. Motor according to any of the preceding claims,
**characterized in that** the outer housing (50) has a can-like shape, having circular cross section with a closed end (53) and an open end, wherein the output shaft (30) extends through the open end.

11. Motor according to any of the preceding claims,
**characterized by** a first rotational bearing (60) for rotation between the output shaft (30) and the inner housing (11) or a flange (40) connected to the inner housing and a second rotational bearing (31) for rotation between the outer housing (50) and said inner housing (11) or said flange (40) connected to said inner housing.

12. Motor according to any of the preceding claims,
**characterized in that** the outer surface (52) of the outer housing is cylindrical.

13. Motor according to any of the preceding claims,
**characterized in that** the inner housing (11) has a cylindrical outer cross-section and is fastened to a gearbox housing (21),
- wherein the drive unit (10) is coupled to said gear box (20) to transfer torque and rotation, said outer housing (50) being closed at one end (53) and being open at the other end,
- wherein further said inner housing (11) and said gearbox (20) are arranged within said outer housing having a cylindrical cross section such that a heat conducting space (80) filled with a heat conducting liquid, in particular oil is provided inside said outer housing,
- said inner housing and said gearbox being immersed in and sealed against said heat conducting liquid,
- wherein the output shaft (30) is extending from the gear box (20) and exits the outer housing at its open end
- wherein a flange (40) is fastened to the gearbox housing (21)
- wherein a first rotational bearing (31) is provided between the flange and the output shaft, and
- wherein a second rotational bearing (60) is provided between the flange and the outer housing, the second rotational bearing preferably surrounding the first rotational bearing.

14. Motor according to any of the preceding claims,
**characterized by** a control unit or a coupling unit adapted to control the speed of rotation of the outer housing in relation to the power output of the drive unit, in particular adapted to provide a low speed of rotation of the outer housing at a low power output of the drive unit and to provide a high speed of rotation of the outer housing at a high power output of the drive unit.

15. Motor according to any of the preceding claims,
**characterized by** a control unit adapted to control the speed of rotation of the outer housing in relation to the temperature of the drive unit, in particular adapted to provide a low speed of rotation of the outer housing at a low temperature of the drive unit and to provide a high speed of rotation of the outer housing at a high temperature of the drive unit.
